# EUROPÄISCHE PATENTSCHRIFT

(11) **EP 3 295 771 B1**
(45) Veröffentlichungstag und Bekanntmachung des Hinweises auf die Patenterteilung: **27.11.2019**
(21) Anmeldenummer: 16728591.5
(22) Anmeldetag: 09.05.2016
(51) Int. Cl.: H05B 33/08, H02M 3/335, H02M 7/217

(54) **VORRICHTUNG MIT GETAKTETEM WANDLER ZUM BETRIEB VON LEUCHTMITTELN**
APPARATUS HAVING A CLOCKED CONVERTER FOR OPERATING LUMINOUS MEANS
DISPOSITIF À CONVERTISSEUR CADENCÉ POUR FAIRE FONCTIONNER DES DISPOSITIFS D'ÉCLAIRAGE

(30) Priorität: 12.05.2015 DE 102015208774; 26.05.2015 AT 1302015 U
(43) Veröffentlichungstag der Anmeldung: 21.03.2018
(73) Patentinhaber: Tridonic GmbH & Co. KG, 6851 Dornbirn (AT)
(72) Erfinder: MITTERBACHER, Andre, 6850 Dornbirn (AT); MAKWANA, Deepak, Newcastle Upon Tyne Tyne and Wear NE4 8UB (GB)
(74) Vertreter: Beder, Jens
(86) Internationale Anmeldenummer: PCT/AT2016/050134
(87) Internationale Veröffentlichungsnummer: WO 2016/179622

(56) Entgegenhaltungen:
- WO-A2-2011/151269
- DE-A1- 10 147 774
- DE-A1-102012 007 449
- DE-A1-102013 207 038
- US-A1- 2007 047 267
- US-A1- 2007 182 387
- US-A1- 2007 291 423

## Beschreibung

Die vorliegende Erfindung betrifft eine Vorrichtung zum Betreiben von Leuchtmitteln und insbesondere einen Konverter für eine LED-Last. Gegenstand der Erfindung ist ein verbesserter Gleichspannungswandler, ausgebildet als getaktete Sperrwandlerkonverterstufe, sowie eine entsprechend ausgebildete Leuchte.

Es sind aus der Literatur Vorrichtungen und Schaltungsanordnungen bekannt, die für Beleuchtungszwecke Leuchtdioden mit entsprechenden Betriebsgeräten (Vorschaltgeräte, LED Konverter) zur Ansteuerung der Leuchtdioden (LED) als Last zeigen.

Häufig verwendete Schaltungsanordnungen in LED-Konvertern sind getaktete Wandlerschaltungen. Eine Ausführungsform der getakteten Wandler sind sogenannte Sperrwandler (auch als "Flyback-Konverter oder "Hoch-Tiefsetzsteller" bezeichnet), die der galvanisch entkoppelten Übertragung von elektrischer Energie von einer Eingangsseite (Primärseite) des Wandlers zu einer Ausgangseite(Sekundärseite) des Wandlers dienen.

Getaktete Sperrwandler sind geeignet, eine Eingangsspannung mit geringem schaltungstechnischen Aufwand auf ein gewünschtes Ausgangsspannungsniveau umzusetzen und an eine Last abzugeben. Sperrwandler werden daher in verschiedenen Anwendungen und insbesondere auch zur Strom- und Spannungsversorgung einer LED-Last, beispielsweise umfassend eine oder mehrere LEDs, in getakteten Schaltnetzteilen eingesetzt. Sperrwandler werden ebenfalls in Schaltungen zum Betrieb weiterer Leuchtmittel, insbesondere Gasentladungslampen, beispielsweise Leuchtstoffröhren, eingesetzt und erfüllen Funktionen wie Spannungsversorgung, Vorheizen oder Zuheizen von Wendeln für Leuchtmittel.

Bei getakteten Sperrwandlern werden steuerbare Schalter, welche vorzugsweise in Form von Leistungsschaltern ausgebildet sind, verwendet, um abhängig von einem Schalterzustand auf der Eingangsseite des Sperrwandlers Energie zu speichern und diese Energie auf die Ausgangsseite des getakteten Sperrwandlers zu übertragen. Eine galvanisch entkoppelte Energieübertragung kann durch Einsatz eines Übertragers (Transformators) erreicht werden. Mit jedem Schaltzyklus des Schalters wird während einer Leitphase in einer Primärwicklung des Übertragers Energie gespeichert und in einer anschließenden Sperrphase auf die Sekundärseite des Übertragers übertragen. Bei primärgetakteten Schaltnetzteilen mit dieser Sperrwandlertopologie ist mindestens ein Schalter ausgebildet als Leistungsschalter oder Transistor auf der Primärseite des Übertragers vorhanden. Die eingangsseitige Eingangsspannung des Sperrwandlers kann beispielsweise aus einer Busspannung oder einer Zwischenkreisspannung des elektronischen Vorschaltgeräts bestehen oder davon abgeleitet sein.

Die Ansteuerung des Schalters zur Taktung und Regelung des Wandlers kann über eine Steuerschaltung als Teil des Wandlers erfolgen.

Bei bekannten getakteten Wandlern, kann eine Hilfswicklung des Übertragers mit der Polarität der Sekundärwicklung des Transformators des getakteten Wandlers verwendet werden, um einerseits den sekundärseitigen Spannungsverlauf für die Regelung zu ermitteln und einer Regelungsschaltung zuzuführen. Andererseits kann die Hilfswicklung auch dazu dienen, eine Versorgungsspannung für eine integrierte Schaltung, beispielsweise eine Regelungsschaltung oder Steuerschaltung des getakteten Wandlers zu gewinnen. Das Dokument WO2011/151269 A2 zeigt einen Konverter, der eine getaktete Wandlerschaltung sowie einen integrierten Transformator aufweist.

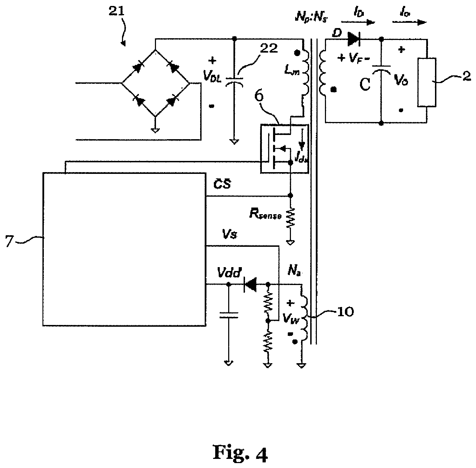

Für die Anwendung in einer LED-Treiberschaltung besteht indessen das Problem, dass die Eingangsspannung des getakteten Wandlers aufgrund einer vorgeschalteten ersten Konverterstufe, beispielsweise einer PFC Stufe, konstant geregelt ist, die sekundärseitige Spannung aufgrund unterschiedlichen Lasten, also einer unterschiedliche Anzahl und Art der LEDs, aber stark schwanken kann. Wenn der Wicklungssinn der Hilfswicklung entsprechend dem üblichen Stand der Technik nach Fig. 4 verwendet wird, wird die Niedervoltspannungsversorgung für die Steuereinheit des getakteten Wandlers eine hohe Spannungsvariation der Last abbilden. In der Folge kann es zu einer hohen Verlustleistungen bei Erzeugung der niedrigen (Niedervolt-) Versorgungsspannung kommen. Die Erzeugung der Versorgungsspannung für die Steuerschaltung wird darüber hinaus erheblichen schaltungstechnischen Aufwand erfordern, um eine entsprechend stabile Versorgungsspannung für die Steuereinheit zu gewährleisten.

Ausgehend von dem zuvor beschriebenen Problem liegt der vorliegenden Erfindung die Aufgabenstellung zugrunde, die Erzeugung einer Versorgungsspannung für die Steuerschaltung eines getakteten Wandlers gegenüber dem Stand der Technik zu verbessern. DieAufgabe wird durch den Konverter für eine LED Last mit den Merkmalen des Anspruchs 1 gelöst.

Eine erfindungsgemäße Vorrichtung umfasst einen Konverter für eine LED-Last, wobei die LED-Last insbesondere mindestens eine Leuchtdiode (LED) umfasst. Der Konverter für eine LED-Last umfasst eine getaktete Wandlerschaltung mit einem entweder in die getaktete Wandlerschaltung selbst integrierten oder aber separat von der Wandlerschaltung ausgebildeten Transformator. Die Wandlerschaltung wird durch Ansteuerung eines Schalters auf einem Potential einer Primärwicklung des Transformators durch eine Steuereinheit getaktet. Eine Hilfswicklung des Transformators ist mit der Primärwicklung und einer Sekundärwicklung des Transformators über ein magnetisches Feld gekoppelt. Die Hilfswicklung ist elektrisch mit der Steuereinheit so verbunden, dass der Steuereinheit ein Messsignal zugeführt wird und/oder dass die Steuereinheit ausgehend von der Hilfswicklung mit einer Spannung versorgt wird. Der erfindungsgemäße Konverter für eine LED-Last zeichnet sich dadurch aus, dass eine Polarität der Hilfswicklung des Transformators gleich einer Polarität der Primärwicklung des Transformators ist.

Infolge der kennzeichnenden Merkmale gegenüber dem Stand der Technik wird erreicht, dass für die Niedervoltspannungsversorgung der Steuereinheit ein Abbild der konstant geregelten primärseitigen Eingangsspannung der getakteten Wandlerschaltung verwendet wird. Somit ist die Versorgungsspannung der Steuereinheit unabhängig von der sekundärseitigen Ausgangsspannung des Konverters beziehungsweise des Ausgangstroms (Laststroms) über die LED-Last. Da die Eingangsspannung des getakteten Wandlerschaltung geregelt, und zudem lastunabhängig ist, wird eine Schwankung der Niedervoltversorgungsspannung der Steuereinheit reduziert bzw. vermieden. Damit einhergehende Verluste in dem Konverter zum Treiben einer LED-Last werden in vorteilhafter Weise ohne erhöhten schaltungstechnischen Aufwand verringert.

Vorteilhafte Weiterbildungen der Erfindung sind Gegenstand der abhängigen Ansprüche.

Gemäß der vorliegenden Erfindung ist es zusätzlich besonders bevorzugt, wenn der erfindungsgemäße Konverter eine zusätzliche Anpassschaltung umfasst. Die Anpassschaltung ist dafür ausgelegt, das mittels der Hilfswicklung erfasste Messsignal an die Steuereinheit mit einem angehoben Spannungspotential zu übertragen.

Die Anpasschaltung bewirkt, dass die Erfassung der sekundärseitigen Spannung des Umformers, die erfindungsgemäß mit umgekehrter Polarität erfolgt, zur Verarbeitung in der Steuereinheit für die Regelung der Ausgangsspannung des Konverters mit positivem Pegel erfolgt. Dies wird beispielsweise mittels Anheben des Potential niveaus des Messsignals erreicht. Das Messsignal entspricht im Wesentlichen einer erfassten induzierten Spannung in der Hilfswicklung, die aufgrund eines sekunddärseitigen Stroms (Laststrom) durch die Sekundärwicklung in der Hilfswicklung des Übertragers induziert wird. Erreicht werden kann diese Potentialanhebung des Messsignals beispielsweise durch geeignete Speisung mit einem Strom ausgehend von der Steuereinheit oder durch eine geeignete Schaltung unter Verwendung eines Widerstands (Ziehwiderstand, "Pull-up"-Widerstand), so dass stets eine positive Spannung an einem Sensoreingang (sensing pin) der Steuereinheit anliegt.

Der Konverter für eine LED-Last gemäß einer Ausführung der Erfindung ist dafür ausgelegt, das Messsignal über die Hilfswicklung für die Steuereinheit bei geöffnetem Schalter, also beispielsweise einem sperrendem Transistor, für die sekundärseitige Regelung des Konverters zu ermitteln und das Messsignal bei geschlossenem Schalter, also beispielsweise einem leitendem Transsistor, für die Steuereinheit als Versorgungsspannung bereitzustellen. Weiter ist es bevorzugt, wenn der Konverter für eine LED-Last eine Anpassschaltung umfasst, die dafür ausgelegt ist, das Messsignal in einer Zeitdauer, während der der Schalter geöffnet ist, auf ein Spannungspotential größer Null anzuheben.

Ein Konverter für eine LED-Last nach einem Ausführungsbeispiel der Erfindung umfasst eine Steuereinheit, die eine aktive integrierte Schaltung, oder ein anwender spezifizierter Schaltkreis (ASIC) oder eine Hybridschaltung ist. Eine Hybridschaltung ist ein Schaltkreis, der sowohl digitale als auch analoge Signale als Eingangs-, Ausgangs- und interne Signale empfängt, verarbeitet und/oder ausgibt.

Die technische Aufgabewird ebenfalls durch eine Leuchtegelöst, die einen Konverter für eine LED-Last nach einer der vorstehenden Ausführungsformen der Erfindung umfasst.

Nachfolgend wird die Erfindung anhand der beiliegenden Zeichnung erläutert. Dabei zeigt
- Fig.1: einevereinfachteschematische Darstellung eines erfindungsgemäßen Konverters für eine LED-Last,
- Fig.2: eine Schaltungsanordnung zum Erzeugen eines erhöhten Spannungspotentials geeignet für ein Ausführungsbeispiel der Erfindung,
- Fig.3: gemessene Signalverläufe in einer Ausführungsform der Erfindung,
- Fig.4: ein Beispiel für eine Sperrwandlerschaltung mit Hilfswicklung ausdem Stand der Technik, und
- Fig.5: ein weiteres Beispiel für Signalverläufe einer getaktete Sperrwandlerschaltung mit Hilfswicklung aus dem Stand der Technik.

In den Figuren zeigen gleiche Bezugszeichen dieselben oder entsprechende Elemente. Zu Gunsten einer knappen Darstellung wird in der folgenden Beschreibung der erfindungsgemäßen Lehre auf eine unnötige Wiederholung verzichtet.

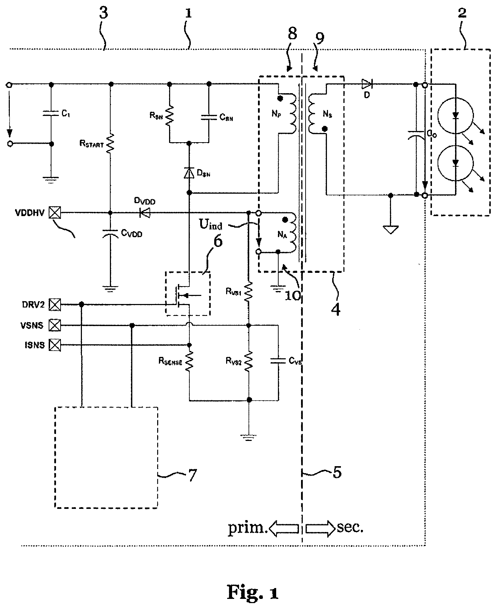

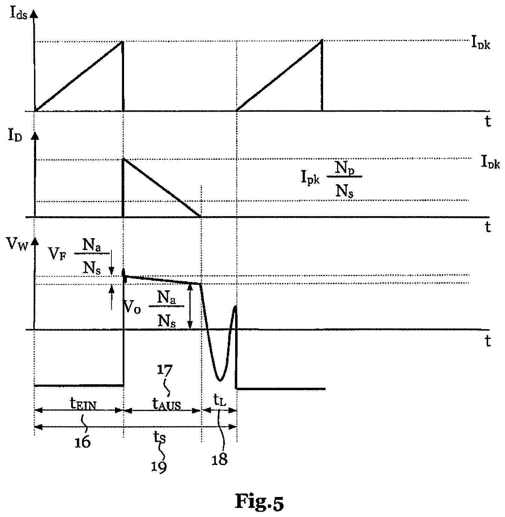

Bevor anhand der Fig.1 ein Ausführungsbeispiel eines erfindungsgemäßen Konverters für eine LED-Last gezeigt wird, werden kurz unter Bezug auf die Fig. 4 und 5 grundsätzliche Eigenschaften eines getakteten Wandlers anhand eines getakteten Sperrwandlers diskutiert. Fig. 4 zeigt ein Prinzipschaltbild einer Sperrwandlerschaltung mit einer Hilfswicklung nach dem Stand der Technik.

Das Prinzip des Sperrwandlers beruht darauf, dass Energie im Magnetfeld eines Transformators (Übertrager) mit einer Primärwicklung und einer Sekundärwicklung gespeichert wird. In einer ersten Phase (Leitphase) der Schaltperiode des getakteten Sperrwandlers erfolgt ein Laden der Induktivität des Transformators über die primärseitige Wicklung und in einer zweiten Phase (Sperrphase) der Schaltperiode erfolgt ein Entladen über die Sekundärseite des Sperrwandlers. Dieser Zyklus einer Schaltperiode wird mit einer hohen Schaltfrequenz wiederholt, so dass ein quasi kontinuierlicher Energiefluss von einer Primärseite des Wandlers zu einer Sekundärseite des Wandlers, und damit von einer Erzeuger- zu einer Lastseite erfolgt.

Die erste Phase wird als Leitphase mit einem geschlossenem Schalter, die zweite Phase auch als Sperrphase mit geöffnetem Schalter bezeichnet. In Fig. 4 ist der Schalter auf der Primärseite des getakteten Sperrwandlers ist durch einen Transistor 6 realisiert. Während der Leitphase t_{EIN} 16 sperrt die Diode D, und es fließt nur ein Strom I_{ds} durch die primärseitige Wicklung Lₘ des Transformators, verursacht durch die Eingangsspannung V_{DL}, wie im oberen Teil der Fig. 5 gezeigt. Die sekundärseitige Wicklung L2 ist in dieser Leitphase stromlos. In dieser Leitphase gibt es keine Energieübertragung von der Primärseite zu der Sekundärseite des Transformators, die Ausgangsspannung V_{O} wird allein durch den Kondensator C im Lastkreis des Transformators gehalten.

Öffnet der Transistor 6, so beginnt die Sperrphase t_{AUS} 17. Der primärseitige Strom I_{ds} fällt aufgrund des nicht mehr leitenden Transistors 6 auf Null. Der Strom I_{D} fließt nun über den Transformator und die Diode D über die Sekundärseite des Transformators, wie es im mittleren Teil der Figur 5 dargestellt ist. Dort lädt er den Kondensator C auf die Ausgangsspannung *V*_{O} auf. Dieser Strom nimmt linear ab und wird in einem lückenden Betrieb des getakteten Wandlers schließlich zu Null. Danach wird der Transistor 6 durch Anlegen einer Gatespannung wieder in den leitenden Zustand geschaltet. Die Leitphase t_{EIN} 16 beginnt erneut und der periodische Schaltzyklus wird erneut durchlaufen. Der eigentliche Energietransport von der Primärseite auf die Sekundärseite des getakteten Wandlers erfolgt während der Sperrphase t_{AUS} 17, weshalb dieses Schaltungsprinzip als Sperrwandler bezeichnet wird.

Eine reale Spule verfügt über Wicklungskapazitäten, die in der Leitphase ebenfalls aufgeladen werden. Die in diesen parasitären Wicklungskapazitäten des Transformators gespeicherte Energie führt mit der Induktivität zu einer gedämpften Eigenresonanzschwingung, nachdem die magnetische Feldenergie über den sekundärseitigen Strom in der Sperrphase t_{AUS} 17 bereits abgeflossen ist. Diese Eigenresonanzschwingung ist in der unteren Teilfigur der Figur 5 deutlich zu erkennen. In der unteren Teilfigur ist eine induzierte Spannung U_{w} in der Hilfswicklung des Transformators über der Zeit t aufgetragen. In einem Bereich t_{IL} 18 ist die Eigenresonanzschwingung im Verlauf der in der Hilfswicklung induzierten Spannung V_{W} zu erkennen.

Die Ausgangsspannung des getakteten Sperrwandlers richtet sich nach der sekundärseitigen Last, beispielsweise einer LED-Last 2. Die Ausgangsspannung ist theoretisch unbegrenzt, sie steigt bei einem ohne Last betriebenen ungeregelten Sperrwandler an, bis beispielsweise die Gleichrichterdiode D, der Schalttransistor 6 oder die Last selbst zerstört werden. Bei ungeregelten Sperrwandlern ist demzufolge ein sekundärseitiger Leerlauf nicht zulässig. Ohne sekundärseitige Last kann die im Umformer gespeicherte Energie, die pro Periode immer konstant ist, nicht mehr abgegeben werden und führt durch die steigende Spannung oder zu große Wärme zu Zerstörung.

Eine parallel zur Last geschaltete Zener-Diode, kann die überschüssige Leistung in Wärme verwandeln und die Last schützen.

Typischerweise erfolgt jedoch eine Regelung des Sperrwandlers. Ein ungeregelter Sperrwandler überträgt bei konstanter Spannung immer die gleiche Leistung aus gespeicherter Energie je Zyklus multipliziert mit der Arbeitsfrequenz, also Anzahl der Leitphasen oder Anzahl der Sperrphasen pro Sekunde.

Falls der Sperrwandler mehr Energie überträgt als die LED-Last als Verbraucher Verbraucher gerade benötigt, steigt die Spannung an der LED-Last. Für die Regelung wird beispielsweise eine Hilfswicklung 10 in dem Transformator angebracht, die zugleich eine Hilfsspannungsversorgung für die Steuerschaltung 7 übernehmen kann. Die induzierte Spannung der Hilfswicklung 10 wird mit einem Referenzspannungswert verglichen und das Ergebnis des Vergleichs dann der Steuereinheit 7 zugeführt, die das Tastverhältnis der Leitphase zu der Sperrphase der getakteten Wandlerschaltung 3 regelt. Die Hilfswicklung 10 wird auch als Rückkopplungsspule bezeichnet. Diese Regelung ist einfach aufgebaut und ist weiter in der Lage, mehrere sekundärseitige Lastkreise gleichzeitig zu regeln.

Um einen Wandler am Stromnetz zu betreiben, wird, wie es in Fig. 4 dargestellt ist, eine eingangsseitige Netzwechselspannung über eine Gleichrichterbrücke 21 gleichgerichtet und mit einem Elektrolytkondensator 22 geglättet. An diesem Elektrolytkondensator 22 liegt eine primärseitige Gleichspannung V_{DL}.

Magnetisch gekoppelte Spulen, die in Sperrwandlern eingesetzt werden, ähneln Transformatoren. Sie unterscheiden sich jedoch insoweit von Transformatoren, als das die gesamte übertragene Energie zwischen den Zuständen Leitphase und Sperrphase im Magnetfeld zwischengespeichert wird. Bei gewöhnlichen Transformatoren wird wegen der gleichzeitigen Leistungsaufnahme und -abgabe nur wenig magnetische Energie im Kern gespeichert. Der Magnetkern weist bei herkömmlichen Transformatoren keinen Luftspalt auf, wohingegen die Kerne bei Sperrwandlern im Regelfall einen Luftspalt wie bei Spulen aufweisen. In diesem Luftspalt ist ein wesentlicher Teil der magnetischen Feldenergie gespeichert. Der Wickelsinn der Wicklungen der einzelnen Spulen des Übertragers ist von wesentlicher Bedeutung. Der Wickelsinn ist in den Ausführungsbeispielen der Erfindung gemäß Fig. 1 und 4 mit einem Punkt am Wicklungsanfang dargestellt. Somit zeigen die Spulenwicklungen in den Fig. 1 und 4 jeweils Anschlüsse gleicher Polarität mit einem Punkt gekennzeichnet.

Der getaktete Wandler zeigt grundsätzlich für einen ausgangsseitigen Kurzschluss vorteilhaftes Verhalten. Durch eine niedrigere, in der Hilfswicklung 10 induzierte Spannung während der Sperrphase verlängert sich die Sperrphase bei einem ausgangsseitigen Kurzschluss. Aufgrund der sich dadurch einstellenden niedrigen Schwingfrequenz wird die Energiezufuhr gedrosselt und schützt den getakteten Wandler vor Überlastung.

Die Fig. 1 zeigt einen Abschnitt eines Konverters 1 mit einer LED-Last 2 entsprechend einem Ausführungsbeispiel der Erfindung. Die LED-Last 2 umfasst im dargestellten Beispiel zwei Leuchtdioden in lediglich einem Lastkreis, ohne das die erfindungsgemäße Vorrichtung darauf beschränkt ist. Der in Fig. 1 dargestellte Ausschnitt eines Konverters 1 zeigt eine getaktete Wandlerschaltung 3, deren Schaltungstopologie einem getakteten Sperrwandler entspricht. Im dargestellten Beispiel ist ein Transformator 4 in die getaktete Wandlerschaltung 3 integriert. Der Transformator 4 kann alternativ getrennt von der getakteten Wandlerschaltung 3 ausgeführt sein. Der Transformator 4 weist eine Primärseite und eine Sekundärseite auf, die durch eine in der Fig. 1 skizzierte Potentialbarriere 5 galvanisch getrennt sind. Die getaktete Wandlerschaltung 3 weist darüber hinaus einen Transistor 6 auf, der primärseitig angeordnet ist und dessen Gate-Elektrode elektrisch mit einer Steuereinheit 7 verbunden ist. Die Gate-Elektrode des hier als MOSFET ausgeführten Transistors 6 wird von der Steuereinheit 7 mit einem Steuersignal DRV2 angesteuert. Entsprechend dieses Steuersignals DRV2 leitet der Transistor 6 oder sperrt der Transistor 6 auf der Strecke Drain-Elektrode-Source-Elektrode und realisiert somit die Funktion eines Schalters S, der je nach Schalterstellung entweder leitet oder sperrt. Die Steuereinheit 7 kann somit den Transistor 6 so auf dem elektrischen Potential einer primärseitigen Wicklung 8 des Transformators 4 ansteuern, dass die Wandlerschaltung 3 durch die Steuereinheit 7 getaktet wird.

Die primärseitige Wicklung (Spule) 8 des Transformators 4 ist mit einer sekundärseitigen Wicklung (Spule) 10 des Transformators 4 magnetisch gekoppelt. Der erfindungsgemäße Transformator 4 weist nun ebenfalls eine Hilfswicklung 10 auf, die mit der primärseitigen Wicklung) 8 des Transformators 4 und mit der sekundärseitigen Wicklung 9 des Transformators 4 magnetisch gekoppelt ist. Die primärseitige Wicklung 8 weist eine Anzahl von N_{P} Windungen auf, die sekundärseitige Wicklung 10 weist N_{S} Windungen auf. Die primärseitige Wicklung 8 und die sekundärseitige Wicklung 19 sind in Figur 1 gegenphasig, also mit entgegengesetzter Polarität gewickelt. Die Hilfswicklung 12 des Transformators 4 ist erfindungsgemäß mit gleicher Polarität wie die primärseitige Wicklung 8 des Transformators 4 in Figur 1 erfindungsgemäß ausgeführt. Die Hilfswicklung 12 weist N_{A} Windungen auf.

Die in Figur 1 dargestellte Polarität der primärseitigen Wicklung 8, der sekundärseitigen Wicklung 9 und der Hilfswicklung 12 führt dazu, dass während einer Zeit T_{EIN}, in der Transistor 6 zwischen den Elektroden Drain und Source leitend ist, eine positive Spannung U_{ind} in der Hilfswicklung 10 induziert wird. Während einer Zeit T_{AUS} sperrt der Transistor 6 zwischen den Elektroden Drain und Source und es wird eine negative Spannung in der Hilfswicklung 10 induziert.

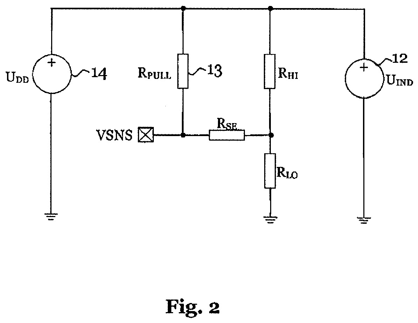

In Fig. 2 wird gezeigt, wie entsprechend einem bevorzugten Ausführungsbeispiel der Erfindung die in der Hilfswicklung 10 induzierteSpannung U_{ind} 12 über einen Ziehwiderstand R_{PULL} 13 zu einer Spannungsquelle U_{DD} 14 im Spannungspotential angehoben wird. Alternativ kann das Potential auch durch eine entsprechende Schaltung unter Verwendung einer Stromquelle angehoben werden. Die entsprechende Stromquelle kann auch interner Teil der Steuereinheit 7 sein. Mittels des Ziehens des Spannungspotentials der Spannung VSNS über einen Ziehwiderstands R_{PULL} 13 wird über einen Spannungsoffset sichergestellt, dass das Messsignal stets mit einem positiven Potential an einem entsprechenden Eingang der Steuereinheit 7 anliegt. Die Spannung U_{DD} kann beispielsweise eine Versorgungsspannung von 3,3 V für einen integrierten Schaltkreis als Steuereinheit 7 sein, die für die Pegelanhebung der induzierten Spannung U_{ind} 12 und damit des Messsignals verwendet wird. Der Ziehwiderstands R_{PULL} 13 ist in einem Ausführungsbeispiel in einer Größenordnung von 3 kΩ gewählt.

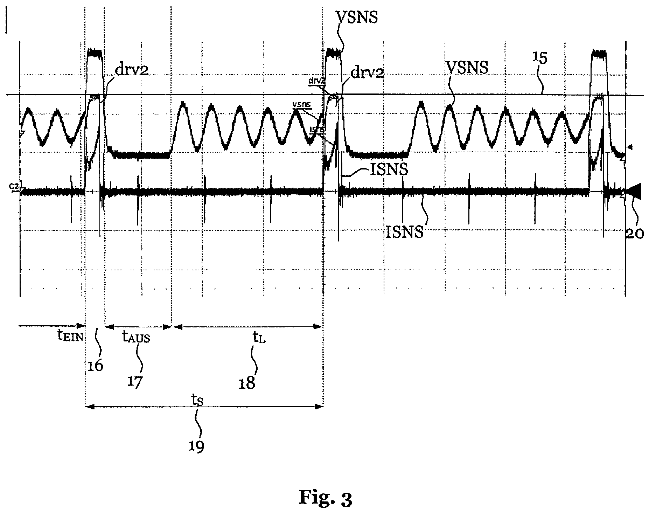

In Fig. 3 werden kennzeichnende Signalverläufe über mehrere Taktperioden ts 19 der getakteten Wandlerschaltung 3 dargestellt. Dabei erfolgt eine Anhebung des Spannungspotentials der Spannung VSNS über einen Ziehwiderstand 13 auf ein Spannungspotential 15, um über die Phasen t_{EIN} 16, t_{AUS} 17 und t_{L} 18 eine positive Spannung VSNS am entsprechenden Eingang der Steuerschaltung 7 zu erreichen. Das Spannungspotential 15 ist in Figur 3 um etwa 2,5 V über die mit einem Marker 20 gekennzeichnete Nulllinie angehoben.

In Fig. 3 ist die Zeit t in horizontaler Richtung mit 5µs je Teilung dargestellt. Die Darstellung des Verlaufs der Spannung drv2 an der Gate-Elektrode des Transistors 6 erfolgt mit 5V je Teilung in Richtung der Ordinate. Der Verlauf der Stroms ISNS durch die primärseitige Wicklung 8 des Transformators Widerstand R_{SENSE} wird mit einem proportionalen Spannungswert von 200mV je Teilung in Richtung der Ordinate gezeigt. Der Verlauf der Spannung VSNS erfolgt mit 1V je Teilung in Richtung der Ordinate.

Aus Fig. 3 ist zu entnehmen, dass infolge der Wahl der Polarität der Hilfswicklung 10 die während der Leitphase t_{EIN} 16 in der Hilfswicklung induzierte Spannung einen positiven Wert hat. Damit ist die in der Hilfswicklung induzierte Spannung U_{ind} und damit die im Pegel angepasste Spannung VSNS des getakteten Wandlers 3 während der Leitphase t_{EIN} 16 abhängig von der Eingangsspannung des getakteten Wandlers 3 und damit sehr stabil. Einflüsse ausgehend von einer LED-Last und damit Instabilitäten der Spannungsversorgung für die Steuerschaltung 7 sind damit in vorteilhafter Weise reduziert.

Hinsichtlich der Spannung n einer Sperrphase t_{AUS} 17 ist aus Figur 3 zu entnehmen, dass die Ermittlung einer Spannung, die proportional zum Strom über die LED-Last 2 ist, in der Sperrphase t_{AUS} 17 aufgrund der Anhebung des Spannungspotentials 15 ("virtuelle Nulllinie") mit positiven Spannungswerten erfolgt. Je höher in der Sperrphase t_{AUS} 17 des Konverters 1 ein Laststrom über die LED-Last 2 ist, umso näher an der Nulllinie wird in dieser Sperrphase t_{AUS} 17 die Spannung VSNSan der Nulllinie verlaufen.

Das der Steuerschaltung 7 zugeführte Messignal wird daher einen Spannungspegel größer als Null aufweisen. In Kombination mit der stabilen Versorgungspannung für die Steuereinheit 7 ohne zusätzlichen schaltungstechnischen Aufwand aufgrund der erfindungsgemäß gewählten Polarität der Hilfswicklung 10 wird durch die Anpassschaltung eine geeignetes Messsignal ausder in der Hilfswicklung 10 induzierten Spannung U_{ind} erzeugt.

## Patentansprüche

1. Konverter für eine LED-Last (2) aufweisend
eine getaktete Wandlerschaltung (3), wobei die getaktete Wandlerschaltung (3) als Sperrwandler ausgebildet ist und umfasst:
einen in die getaktete Wandlerschaltung (3) integrierten oder separaten Transformator (4),
eine Steuereinheit (7) ausgelegt dafür, die Wandlerschaltung (3) durch Ansteuerung eines Schalters (6) der Wandlerschaltung (3) zu takten, und
eine mit einer Primärwicklung (8) und einer Sekundärwicklung (9) des Transformators (4) gekoppelte Hilfswicklung (10), die elektrisch mit der Steuereinheit (7) derart verbunden ist, dass die Hilfswicklung (10) der Steuereinheit (7) ein Messsignal zuführt und dass die Steuereinheit (7) ausgehend von der Hilfswicklung (10) mit Spannung versorgbar ist,
wobei die Hilfswicklung (10) gleichsinnig zu der Primärwicklung (8) und gegensinnig zu der Sekundärwicklung (19) des Transformators (4) gewickelt ist, und der Konverter **dadurch gekennzeichnet ist,**
**dass** die Hilfswicklung (10) ausgelegt ist, das Messsignal für die Steuereinheit (7) bei sperrendem Schalter (6) bereitzustellen, und
mittels des Messsignals bei leitendem Schalter (6) die Steuereinheit (7) als Versorgungsspannung zu speisen, und
**dass** der Konverter (1) weiter eine Anpassschaltung umfasst, und
die Anpassschaltung ausgelegt ist, das Messsignal an die Steuereinheit (7) mit einem angehobenen Spannungspotential zu übertragen, wobei die Anpassschaltung einen Widerstand (13) angeordnet zum Anheben des Potentials des Messsignals umfasst, und/oder
**dass** die Anpassschaltung ausgelegt ist, das Potential des Messsignals gespeist von einem Strom ausgehend von der Steuereinheit (7) anzuheben.

2. Konverter für eine LED-Last (2) nach Anspruch 1,
**dadurch gekennzeichnet,**
**dass** die Anpassschaltung ausgelegt ist, das Messsignal in einer Zeitdauer bei sperrendem Schalter (6) auf ein Spannungspotential größer Null anzuheben.

3. Konverter für eine LED-Last (2) nach einem der Ansprüche 1 oder 2, **dad**
**urch gekennzeichnet,**
dass die Steuereinheit (7) eine aktive integrierte Schaltung oder ein anwenderspezifizierter Schaltkreis oder eine Hybridschaltung ist.

4. Leuchte,
**dadurch gekennzeichnet,**
**dass** die Leuchte einen Konverter (1) nach einem der Ansprüche 1 bis 3 umfasst.

## Claims

1. A converter for an LED load (2) having
a clocked converter circuit (3), wherein the clocked converter circuit (3) is designed as a flyback converter and comprises:
a transformer (4) which is integrated into the clocked converter circuit (3) or separate,
a control unit (7) designed to clock the converter circuit (3) by controlling a switch (6) of the converter circuit (3), and
an auxiliary winding (10) coupled with a primary winding (8) and a secondary winding (9) of the transformer (4), which is connected electrically to the control unit (7) in such a manner that the auxiliary winding (10) of the control unit (7) supplies a measurement signal and that the control unit (7) can be supplied with voltage starting from the auxiliary winding (10),
wherein the auxiliary winding (10) is wound in the same direction as the primary winding (8) and in the opposite direction to the secondary winding (9) of the transformer (4), and the converter
**is characterized in**
**that** the auxiliary winding (10) is designed to provide the measurement signal for the control unit (7) in the case of a blocking switch (6), and
by means of the measurement signal in the case of a conductive switch (6) to feed the control unit (7) as a supply voltage, and
**that** the converter (1) further comprises an adapter circuit, and
the adapter circuit is designed to transmit the measurement signal to the control unit (7) with raised voltage potential, wherein the adapter circuit comprises a resistor (13) arranged to raise the potential of the measurement signal, and/or
**that** the adapter circuit is designed to raise the potential of the measurement signal fed by a current starting from the control unit (7).

2. The converter for an LED load (2) according to Claim 1,
**characterized in**
**that** the adapter circuit is designed to raise the measurement signal in a time period in the case of a blocking switch (6) to a voltage potential greater than zero.

3. The converter for an LED load (2) according to any one of Claims 1 or 2,
**characterized in**
**that** the control unit (7) is an active integrated circuit or a user-specified switching circuit or a hybrid circuit.

4. The luminaire,
**characterized in**
**that** the luminaire comprise a converter (1) according to any one of Claims 1 to 3.

## Revendications

1. Convertisseur pour une charge de LED (2), comprenant
un circuit convertisseur cadencé (3), le circuit convertisseur cadencé (3) étant conçu comme un convertisseur de blocage et comprenant :
un transformateur (4) intégré dans le circuit convertisseur cadencé (3) ou séparé,
une unité de commande (7) conçue pour cadencer le circuit convertisseur (3) par le contrôle d'un commutateur (6) du circuit convertisseur (3) et
un enroulement auxiliaire (10) couplé avec un enroulement primaire (8) et un enroulement secondaire (9) du transformateur (4), qui est relié électriquement avec l'unité de commande (7) de façon à ce que l'enroulement auxiliaire (10) introduise dans l'unité de commande (7) un signal de mesure et en ce que l'unité de commande (7) peut être alimentée en tension à partir de l'enroulement auxiliaire (10),
l'enroulement auxiliaire (10) étant enroulé dans le même sens que l'enroulement primaire (8) et dans le sens inverse de l'enroulement secondaire (19) du transformateur (4) et le convertisseur étant
**caractérisé en ce que**
l'enroulement auxiliaire (10) est conçu pour mettre à disposition le signal de mesure pour l'unité de commande (7) lorsque le commutateur (6) bloque et
pour alimenter, au moyen du signal de mesure, lorsque le commutateur (6) est conducteur, l'unité de commande (7) en tant que tension d'alimentation et
le convertisseur (1) comprend en outre un circuit adaptateur et
le circuit adaptateur est conçu pour transmettre le signal de mesure à l'unité de commande (7) avec un potentiel de tension augmenté, le circuit adaptateur comprenant une résistance (13) disposée pour l'augmentation du potentiel du signal de mesure et/ou
le circuit adaptateur est conçu pour augmenter le potentiel du signal de mesure alimenté par un courant à partir de l'unité de commande (7).

2. Convertisseur pour une charge à LED (2) selon la revendication 1,
**caractérisé en ce que**
le circuit adaptateur est conçu pour amener le signal de mesure à un potentiel de tension supérieur à zéro dans une durée lorsque le commutateur (6) bloque.

3. Convertisseur pour une charge à LED (2) selon l'une des revendications 1 ou 2,
**caractérisé en ce que**
l'unité de commande (7) est un circuit intégré actif ou un circuit spécifique à l'utilisateur ou un circuit hybride.

4. Luminaire,
**caractérisé en ce que**
le luminaire comprend un convertisseur (1) selon l'une des revendications 1 à 3.
